(19)

Europäisches
Patentamt
European
Patent Office
Office européen
des brevets

(11) **EP 2 830 285 A1**

(12) **EUROPEAN PATENT APPLICATION**

(43) Date of publication:
**28.01.2015 Bulletin 2015/05**

(51) Int Cl.:
***H04L 29/08*** (2006.01)

(21) Application number: **13306079.8**

(22) Date of filing: **25.07.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Neumann, Christoph**
  **35576 Cesson-Sévigné (FR)**

• **Le Scouarnec, Nicolas**
  **35576 Cesson-Sévigné (FR)**
• **Straub, Gilles**
  **35576 Cesson-Sévigné (FR)**

(74) Representative: **Perrot, Sébastien**
**Technicolor R&D France Snc**
**975, avenue des Champs Blancs**
**CS 17616**
**35576 Cesson-Sévigné Cedex (FR)**

(54) **Method for caching of data items in a cloud based data processing system and corresponding device**

(57)    The present invention provides a scalable and cost-effective solution for implementing a cache in a cloud based data processing environment.

**Fig. 3**

EP 2 830 285 A1

**Description**

**1. Field of invention.**

The present invention relates to the field of cache policies for cloud-based storage services.

**2. Technical background.**

A variety of data processing systems rely on caches: CPU caches speed-up access to memory pages; hard-disk caches speed-up access to files; network caches (e.g., proxies, CDNs) optimize network traffic, load, cost and speed-up data access.

Classical caches implement *cache replacement algorithms,* such as Least Recently Used (LRU) or Least Frequently Used (LFU), that decide which item to remove from the cache and to replace with a new item. These algorithms try to maximize the hit ratio of the cache.

Cloud-based caching consists in storing frequently accessed files on cloud storage services (e.g., Amazon S3); in other words, it uses cloud storage as a data cache. Such a cache is beneficial for files that would have been recomputed using cloud compute or retrieved from a private data center at each access without a cache.

While classical caches for non-cloud based data processing systems have largely proven their usefulness and efficiency, they are not well-adapted to cloud-based data processing systems that extensively rely on cloud storage (e.g., Amazon S3) and cloud compute (e.g., Amazon EC2). A first difference between caching of data in classical data processing systems and caching of data in cloud-based data processing systems is that cloud-based data processing systems do not impose a limit on the cache capacity; the size of the cache is virtually infinite. A second difference is that contrary to classical caching, cloud-based caching adopts a pay-per-use cost model. Generally, the cost is proportional to the volume of cached data times caching duration. A third difference is that there is also a cost of not caching an item, e.g., a cost of (re)computing an item using cloud compute or the cost of fetching the item from a remote location. For cloud-based caching, the maximization of the hit ratio is no longer the only objective. Other parameters are also to be taken into account when designing a cloud based cache.

Thus, with the advent of cloud-based systems, cache design has to be reconsidered.

**3. Summary of the invention.**

The purpose of this invention is to solve at least some of the problems that occur when implementing a caching mechanism for cloud-based data processing systems. The caching method and device of the current invention contributes to a minimization of overall cost of a cloud-based data processing system.

To this end, the current invention comprises a method for caching of data items in a cloud based data processing system, comprising a step of measuring a mean request arrival rate for a read request of a data item over a time period of duration *d*, the time period being shifted to end within less than *x* seconds before current time; a step of, upon receipt of a read request for a data item, comparing the measured mean request arrival rate for the data item to a threshold defined as cloud storage cost over cloud compute cost; a step of, if the mean request arrival rate of read requests for the data item is superior to the threshold, adding the data item to the cache if it was not already in the cache; and otherwise, not adding the data item to the cache.

According to a variant embodiment, upon expiration of a timer, the mean request arrival rate for read requests for data items in the cache is compared to the threshold and a data item is removed if its mean request arrival rate is lower than the threshold.

According to a variant embodiment, upon receipt of the read request, the mean request arrival rate for data items in the cache is compared to the threshold and a data item is removed if its mean request arrival rate is lower than the threshold.

According to a variant embodiment, the determined time period *d* is equal or superior to the inverse of the threshold.

According to a variant embodiment, the method further comprises a step of periodically adapting the threshold to observed cloud storage cost and cloud compute cost.

According to a variant embodiment, the cloud based data processing system is a delivery platform for transmission of video content to a plurality of receiver devices and the data items are video chunks comprising a sequence of video frames.

According to a variant embodiment, the video chunks comprise generic video chunks that are transmitted to all of the plurality of receiver devices requesting a generic video chunk and wherein the video chunks further comprise targetable video chunks that are adapted, before transmitting to a receiver device of the plurality of receiver devices requesting the targetable video chunk, according to user preferences of a user of the receiver device by inlaying of targeted content in at least some video frames of the targetable video chunk, the targeted content being determined according to the user preferences.

According to a variant embodiment, the cloud storage cost is a cost of storing, by a cloud storage service, of a targetable video chunk which is adapted according to user preferences, and wherein the cloud compute cost is a cost of computing, by a cloud compute service, of a targetable video chunk for adapting it to user preferences.

According to a variant embodiment, the data items are computed from data blocks encoded using erasure correcting codes or data compression source codes, and computed data items are stored in the cache if their request arrival rate is superior to the threshold, or not stored in the cache otherwise, so as to be recomputed at each read request, the recomputing having the cloud compute cost.

The present invention also concerns a device for caching of data items in a cloud based service, the device comprising a measurement unit for measuring a mean request arrival rate for a read request of a data item over a time period of duration $d$, the time period being shifted to end within less than $x$ seconds before current time; a comparison unit for comparing, upon receipt of a read request for a data item, the measured mean request arrival rate for the data item to a threshold defined as cloud storage cost over cloud compute cost; a cache adder for adding the data item to the cache if the mean request arrival rate of read requests for the data item is superior to the threshold, if the data item was not already in the cache.

The discussed advantages and other advantages not mentioned in this document will become clear upon the reading of the detailed description of the invention that follows.

## 4. List of figures.

More advantages of the invention will appear through the description of particular, non-restricting embodiments of the invention. The embodiments will be described with reference to the following figures:

**Figure 1** is an example cloud-based architecture for targeted advertisement inlaying, where the invention can be applied.

**Figures 2a and 2b** illustrate a principle of a sliding window according to the invention, allowing to get a good estimation of arrival rate of requests for data items.

**Figure 3** is a flow chart of an embodiment of the method of caching according to the invention.

**Figure 4** is an example embodiment of a cache device according the invention.

## 5. Detailed description of the invention.

The current invention contributes to a minimization of overall cost of a cloud-based data processing system. An example use case of the current invention where the latter can be advantageously used is a cloud-based personalized video generation and delivery platform, where video content contains predefined advertisement placeholders for advertisement inlaying. These predefined advertisement placeholders are typically billboards that are included in the video content. Advertisements are dynamically chosen during the video delivery to a client's end user device according to the end user's profile. The dynamically chosen advertisements are inlayed into the appropriate predefined advertisement placeholders in the video content using cloud compute e.g. Amazon EC2, EC2 standing for Elastic Compute Cloud. Amazon EC2 is a web service that provides resizable compute capacity in the cloud. Alternatives to Amazon for cloud compute are for example: Terremark/vCloud Express, Eucalyptus, Slicehost/Rackspace, and others. In the example personalized video generation and delivery platform, the video content is cut into chunks such that video processing for the personalized video generation is restricted to relevant portions of the video content. Several end users with overlapping user profiles may be targeted with same advertisements in personalized chunks of a same video content. Instead of recomputing these personalized chunks for each of the several users, the platform can cache them using cloud storage (e.g., Amazon S3, alternatives are Rackspace, Windows Azure, SimpleCDN, and others). Advertisement inlaying consists in inserting advertisements as textures or objects *within* a video content, in contrast to classical video advertising that interrupts the video content to show advertisement sequences. With advertisement inlaying, advertisements cannot be skipped as they are an integral part of the video content itself when it is delivered to the end user device. In movie productions, object inlaying is done during a video post-production process. This is a costly process as it requires a manual verification of the final rendering. Other manual operations in the advertisement inlaying workflow includes an identification of advertisement placeholders. Advertisement placeholders are manually identified during the post-production process and inlaying and rendering are manually verified using example textures. During this manual process, metadata are generated that describe location and characteristics of the identified advertisement placeholders. Then, based on the identified advertisement placeholders and during an offline processing step, the video content is split into chunks of closed GOPs (Group Of Pictures); only chunks that contain advertisement placeholders are recomputed and personalized ("targeted") during content distribution; these chunks are referred to as "targetable" chunks, as opposed to "non-targetable" chunks, that do not contain advertisement placeholders. The video content is delivered to end user devices using adaptive streaming methods such as Apple HLS (Http Live Streaming) or MPEG DASH (Dynamic Adaptive Streaming over Http). A playlist or "manifest file" containing URLs (Uniform Resource Locator) to chunks of a video content is transmitted to the end user device. Every end user device can receive a different playlist, containing some targeted chunks. In the example cloud based video content generation and delivery platform, cloud compute is used during video content distribution to generate targeted chunks on-the-fly. Generating a targeted chunk consists in (i) decoding a chunk that contains an identified advertisement placeholder, (ii) choosing an advertisement that corresponds to the end user's profile, (iii) inlaying the chosen advertisement in every relevant frame of the decoded chunk using the corresponding metadata, (iv) reencode the resulting chunk of the video content in a distribution format compatible with the delivery network, and (v) transmission of the thus generated targeted chunk to the end user device and storing the generated targeted chunk in cloud cache area if needed (the process behind the decision to store generated targeted chunks into cloud cache area or not will be handled further on in this document). Thus, according to this processing, the video generation and delivery platform chooses, when an end user device asks for a given chunk, which advertisement to inlay into each placeholder of that chunk for the particular user according to the user's profile. A complete generation of the chunk using cloud compute can be avoided if the chunk is already present in the cloud cache area.

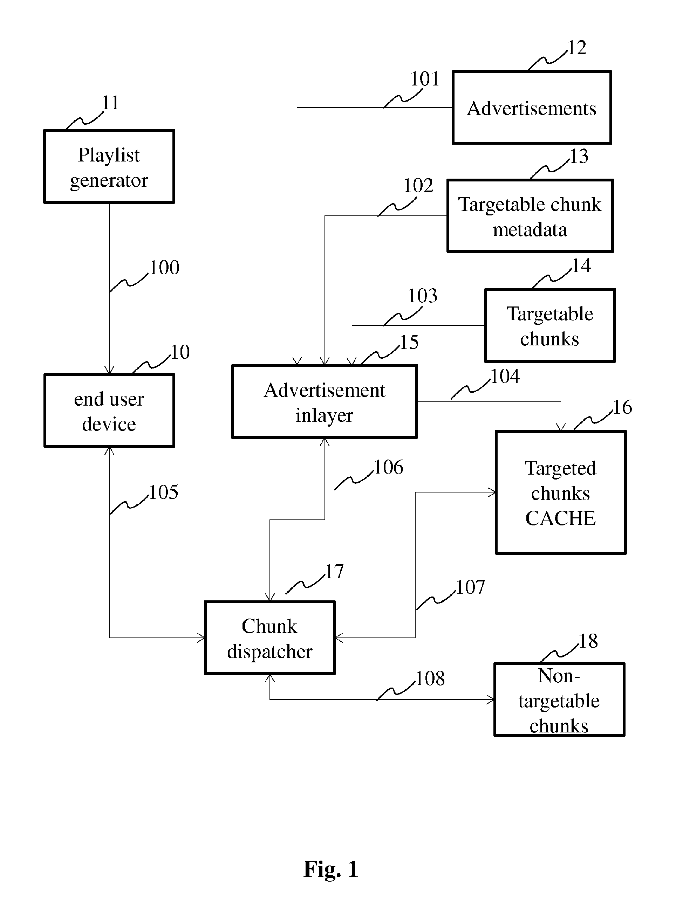

**Figure 1** is an example architecture of the above discussed cloud-based video content generation and delivery platform that provides targeted advertisement inlaying. An end user device 10 obtains (arrow 100) a playlist or manifest file (comprising URLs to chunks of a requested video content) for a requested video content from playlist generator 11. When the end-user device plays the video content, it regularly requests (arrow 105) chunks; these requests are addressed to chunk dispatcher 17. The chunk dispatcher either obtains the requested chunk from advertisement inlayer 15 (arrow 106), or from cloud cache area 16 (arrow 107), or from non-targetable chunk storage 18 (arrow 108). The advertisement inlayer 15 obtains targetable chunks from targetable chunk storage 14 (arrow 103), inlays in these chunks advertisements obtained from advertisement storage 12 (arrow 101) according to metadata obtained from targetable chunk metadata storage 13 (arrow 102), then provides the resulting targeted chunks (in which advertisements are inlayed) to chunk dispatcher 17 (arrow 106) and optionnaly stores the targeted chunks into cloud cache area 16 (arrow 104).

Playlist generation by playlist generator 11, targeted chunk generation by advertisement inlayer 15, and redirection of chunk requests by chunk dispatcher 17 are handled by cloud compute instances. Non-targetable chunk storage 18, targeted chunks storage 16, targetable chunk storage 14, advertisement storage 12, and metadata storage 13 are stored on cloud storage.

A computing cost and a storage cost can be associated to any item of data while operating the cloud-based video content generation and delivery platform. In order to minimize its operating cost, there is a need to define the best strategy for either (re)computing or storing the items. This problem can be reformulated into a cache policy problem, that decides the items to keep or not to keep data items in the cache.

Most prior art cache policies assume a fixed size cache and are flavors of previously discussed LRU or LFU policies. According to these policies, a data item is removed from the cache as a function of data item access frequency or data item last access time. While these cache policies can in principle be adapted to a cloud environment by defining a limit to the cache size, they are not optimized for such an environment because they do not take into account a number of parameters that come into play in the cloud environment, notably storage cost and computation cost to recalculate a data item if it is not in cache. Additionally, determining a limit for the cache size is not practical in real applications; for example, in the case of a cloud-based personalized video generation and delivery platform, since the cache size depends on the number of requests for a chunk and data popularity distribution such as that of the movie to which the chunk belongs.

Other prior art cache policies are time-based and initially apply a time-to-live (TTL) to every data item as it is stored in cache. A cache server using such cache policy periodically decrements the TTL. A data item is removed from cache when its TTL has expired. Time based policies aim at maintaining data consistency. They do not impose a cache size limit by themselves but are often used in addition to some LRU or LFU policy that work with fixed cache sizes. Time based policies are for example used by DNS cache resolvers and web proxies. In general, the TTL value of an item is fixed by the originating server of the item (e.g. by the authoritative DNS domain manager or the source Web server).

The above discussed cache policies are not efficient when applied to a pay-per-use model as in a cloud environment as they do not optimize cost of storing vs cost of computing. There is thus a need to define new cost effective policies that are not necessarily bounded by a cache size limit but that rather consider various cost factors.

In this section, we suppose that requests for an individual data item $k$ (corresponding for example to one chunk in a movie $i$ with an advertisement $j$) arrives according to an homogeneous Poisson process of intensity $\lambda_k$. We study the cost for serving a request when a given data item is stored in a cache. The data item is deleted from the cache if it is not accessed for more than $T_k$ seconds. If the data item is not in the cache, it is computed. The storage cost is defined as being S dollars per data item per second, and the computation cost is defined as being C dollars per data item per computation. As a practical case, consider a video with an output bitrate of 3.5Mbit/s, which provides 720p HD quality; the video is split into ten second length chunks. Tests indicate that such chunks can be calculated in real-time using Amazon EC2 M1 Large Instances. At the time of writing of this document these instances cost 0.26$ per hour. Based on the mentioned tests, this results in a cloud compute cost C = 7.2x10$^{-4}$ $ per chunk. Similarly, using the cloud storage costs of Amazon S3, cloud storage cost S = 4,86 x 10$^{-7}$ $ per hour per chunk, based on a cost of 0.08$ per gigabyte per month. For the sake of clarity, any transmission cost (for transmitting a data item from or to cloud storage) is left out of the equations in this section since it is the same for data items available in the cache and for data items not available in the cache.

Let $t$ be a continuous variable corresponding time lapsed since a last access to data item $k$. Since request arrivals for access to a data item follows an homogeneous Poison process, the probability that a next request for the data item $k$ arrives at time $t$ is

$$p(t) = \lambda_k \exp^{-\lambda_k t} \tag{1}$$

Let $X_k$ be a continuous random variable corresponding to a cost for serving a data item $k$. For a given request, if $t < T_k$, then the data item is served from the cache and there are only storage costs $X_k = tS$. If $t > T_k$, then the data item is stored for $T_k$ seconds, and re-computed when accessed. Hence, the expected cost for serving the data item $k$ is

$$E[X_k] = \int_0^{T_k} p(t)tS\,dt + \int_{T_k}^{\infty} p(t)(T_k S + C)\,dt \tag{2}$$

which simplifies to

$$E[X_k] = \frac{S}{\lambda k} + \frac{(\lambda kC - S)exp^{-\lambda kTk}}{\lambda k} \tag{3}$$

The expected cost $E[X_k]$ for serving a request when a data item is in cache has thus a first minimum for $T_k = 0$ if $\lambda_k < \frac{S}{C}$, and a second minimum for $T_k = \infty$ if $\lambda_k > \frac{S}{C}$.

If the arrival rate $\lambda_k$ for an individual data item $k$ is perfectly known, (3) allows to determine an ideal caching policy, whereby $\frac{S}{C}$ is defined as being a threshold in order to decide to cache a data item or not:

*(i)* never cache the data item $k$ if its arrival rate $\lambda_k$ is smaller than the ratio: cloud storage cost over cloud compute cost $\left(\lambda_k < \frac{S}{C}\right)$;

*(ii)* indefinitely cache the data item $k$ if its arrival rate is greater than the ratio: cloud storage cost over cloud compute cost $\left(\lambda_k > \frac{S}{C}\right)$.

In practice, $\lambda_k$ is variable over time and cannot be perfectly known as it is not possible to foresee the future. It is therefore interesting to know how to get at best a good estimation of $\lambda_k$. According to the invention, in order to solve this problem, the arrival rate $\lambda$ of each data item $k$ (e.g. each chunk in a movie $i$ with an advertisement $j$) is continuously measured by periodically counting the total number of requests for the data item $k$ occurring over a sliding temporal window, and then calculate $\lambda_k$ by dividing the obtained total number by the duration of the sliding window, and thus obtain a mean arrival rate $\lambda_k$ of past requests for a data item during the measurement period of the sliding window.

Following the previous observation that data items for which $\lambda_k < \frac{S}{C}$ should not be stored at all, and that data items for which $\lambda_k > \frac{S}{C}$ should be stored indefinitely, this policy compares the threshold $\frac{S}{C}$ to the periodically measured value of $\lambda_k$ in order to choose between storing in cache or not of a data item $k$. The decision to store the data item $k$ or to not store the data item *k* is then continuously revisited each time the measured value $\lambda_k$ changes. A data item k that is stored in the cache is removed from the cache when the access frequency $\lambda_k$ drops below the threshold $\frac{S}{C}$.

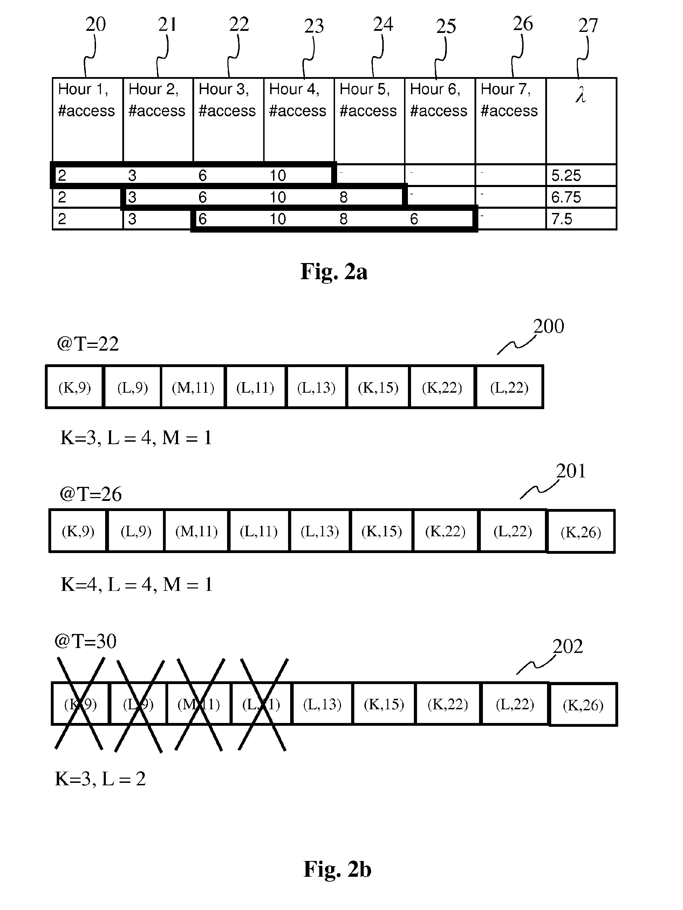

**Figures 2a and 2b** illustrate the principle of a sliding window according to the invention, which allows to get a good estimation of $\lambda$. The table of **figure 2a** shows a simplified example of observed arrival rates of request for items over time. Table columns 20-26 represent subsequent one hour time slots. Table rows represent different data items, for example k, I and m. Column 27 represents values of $\lambda$ calculated by dividing the measured total number of requests by the duration of the sliding window, in this case $\lambda_k$=5.25 requests/hour, $\lambda_L$=5.25 requests/hour, and $\lambda_m$=7.5 requests/hour. The black rectangles represent the sliding window. As can be observed, the sliding window advances or shifts in the direction of the current time at each time slot end. **Figure 2b** shows a simple example of another embodiment that allows to get a good estimation of $\lambda$. From top to bottom, three tables are depicted, representing a sliding window. The first table represents the sliding window An entry is added to the table as a read request for a data item is received. For example, in table 200 data item k was requested three times, at T=9, at T=15 and at T=22; data item L was requested 4 times, at T=9, T=11, T=13, and T=22; data item M wad requested once, at T=11. At T=26 and according to table 201, data item K was further requested at T=26, and K was thus requested 4 times. At T=30 and according to table 202, the sliding window duration has reached d=18, therefore the sliding window is updated, by removing of entries that are older than T=now() - *d*. According to the updated sliding window, K was now requested 3 times, and L was requested 2 times, while M was no longer requested.

Using either of these methods, the request arrival rate for a specific data item is thus measured over a time period corresponding to the sliding window duration. This request arrival rate is then compared to threshold of cloud storage cost over cloud compute cost. If the request arrival rate is superior to the threshold, the data item is added or kept in cache if it was already in cache, while if the request arrival rate is lower or equal to the threshold, the data item is not added to cache, or removed from cache if it was already in cache. The threshold is defined as $\frac{S}{C}$ and is thus both dependent on the storage cost *S* (to keep an item stored) and on the computation cost *C* (to recalculate an item instead of storing it).

According to a variant embodiment, this comparing of the mean request arrival rate for data items in the cache to the threshold is done upon expiration of a timer, and a data item is removed from cache if its mean request arrival rate is lower than the threshold. This allows to regularly "clean up" the cache.

According to a variant embodiment, the comparing is done upon a receipt of a read request, and a data item is removed if its mean request arrival rate is lower than the threshold. This allows to "clean up" the cache each time a request is received.

Advantageously, the sliding window duration *d* is set to a value that is the inverse of the threshold or superior to the inverse of the threshold, i.e. *d* being equal or superior to $\frac{C}{S}$. This value is based on the following observation, that a sliding window with a duration *d* can measure arrival rates greater than 1/*d* but is not able to measure arrival rates smaller than 1/*d*. Thus, to determine if an arrival rate is greater or smaller than $\frac{S}{C}$, it follows that the sliding window has a duration of at least $\frac{C}{S}$.

The sliding window duration *d* may vary for various reasons:

- as *d* has a duration of at least the inverse of the threshold, *d* may change as costs C or S change.
- upon cloud based data processing system start, there is not enough information in the past to have a complete *d*, so *d* is limited by the elapsed time from the start to the current time, until the elapsed time is *d*.
- when the sliding window update is performed every time unit (for example 1 hour), *d* can vary as the window start remains fixed (e.g., for one hour) while the window end advances with time.

Also, the sliding window may not end exactly at the current time, but may end within x seconds before current time:

- for example, the request arrivals counted in the sliding window may be updated with new requests by a background process that is triggered every hour, or when the system is lowly loaded, the new requests being entered into a processing log as they arrive, until they are handled by the background process;
- for example, the request arrivals counted in the sliding window may be updated every time unit (e.g. every hour) whenever the expiration process shifts the sliding window by one time unit (e.g. by one hour) if the sliding window is implemented as discrete time slots.

The fact that $d$ and $x$ vary has no impact on the measurement of $\lambda$, and as a consequence their variation has no impact on the request arrival rate to the threshold since A is computed with the number of requests divided by the width of the window $d$, thus giving a measure in requests per time unit (e.g. per second).

According to an advantageous variant embodiment of the invention, the threshold is periodically adapted to observed cloud storage and cloud compute costs. This allows to dynamically change the threshold as costs evolve. Adapting of the threshold can have an impact on the sliding window duration $d$, since the sliding window has a duration of at least $\dfrac{C}{S}$ as is mentioned above.

According to an advantageous variant embodiment, the caching method according to the invention is implemented in a delivery platform for transmission of video content to a plurality of receiver devices, and the data items are video chunks that comprise video frames.

According to a variant embodiment, these video chunks are either generic video chunks that are transmitted without distinction to all of the plurality of receiver devices, or "personalizable" or "targetable" video chunks that are personalized or targeted according to a user preference or profile of a user of a specific receiver device of the plurality of receiver devices. The personalization or targeting of the personalizable or targetable video chunks is for example done by inlaying of targeted content such as advertisements in one or more video frames of the video chunks that are to be personalized/targeted, the advertisements being chosen according to the mentioned user preferences.

According to a variant embodiment of the present invention, the previous mentioned cloud storage cost is a cost of storing by a cloud storage service of a targetable video chunk that is adapted to the user preferences, and the cloud compute cost is a cost of computing (for encoding) by a cloud compute service of an targetable video chunk in order to adapt it to user preferences.

According to a variant embodiment, the data items are computed from data blocks encoded using erasure correcting codes or data compression source codes, and the computed data items are stored in the cache if their request arrival rate is superior to the threshold. Otherwise, the computed data items are not stored in cache, and are thus to be recomputed if they are requested, at the cost of the cloud compute cost. In this case, the cloud storage cost is the cost of storing by a cloud storage service, of an encoded data item; and the cloud compute cost is a cost of decoding, by a cloud compute service, of an encoded data block.

The above discussed variants can be combined between them to form particular advantageous variant embodiments.

While the above examples are based on Amazon cloud computing architecture, the reader of this document will understand that the example above can be adapted to cloud computing architectures that are different from the Amazon cloud computing architecture without departing from the principles of the invention.

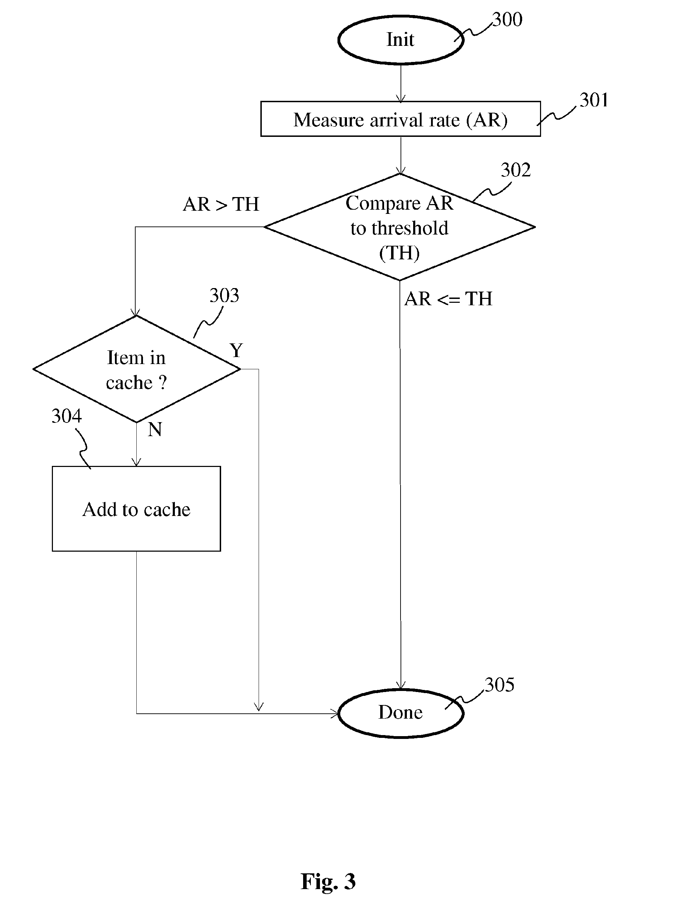

**Figure 3** illustrates a flow chart of a particular embodiment of the method of the invention. In a first initialization step 300, variables are initialized that are used for the method. In a step 301, the mean arrival rate of requests for data items is measured. These measurements are compared to the threshold S/C in a step 302. If the mean arrival rate of a data item is superior to the threshold, it is verified in a step 303 that the item is not yet in cache, and if so, it is added to cache in a step 304. Otherwise, no action is taken.

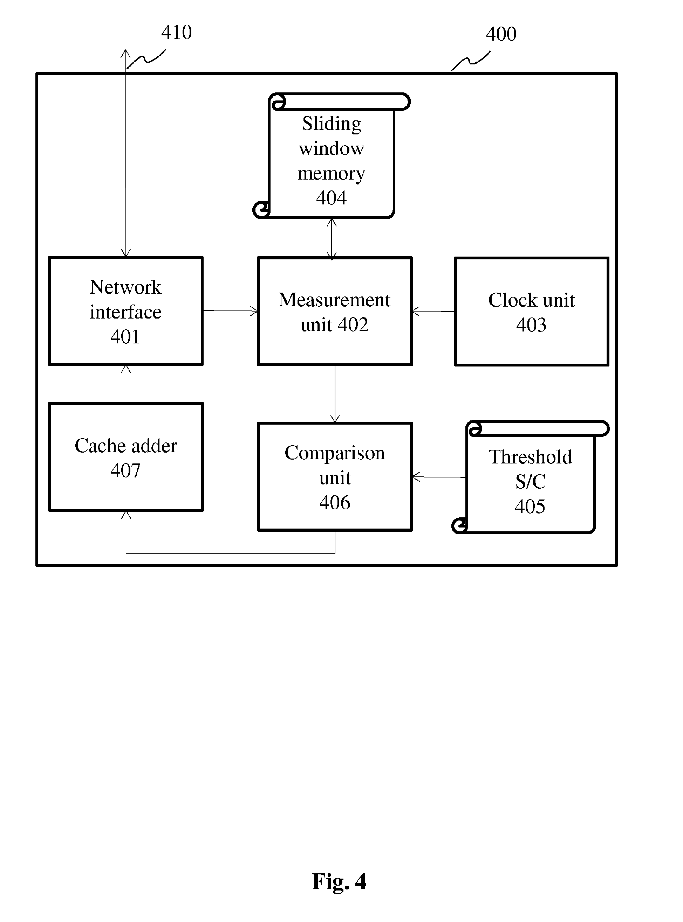

**Figure 4** shows an example embodiment of a device implementing the invention. 10. The device (400) comprises a network interface (401), for data communication with the cloud; a measurement unit (402) for measuring a mean request arrival rate for a read request of a data item over a time period of duration $d$, said time period being shifted to end within less than $x$ seconds before current time; a comparison unit (406) for comparing, upon receipt of a read request for a data item, the measured mean request arrival rate for the data item to a threshold defined as cloud storage cost over cloud compute cost; a cache adder (407) for adding the data item to the cache if the mean request arrival rate of read requests for the data item is superior to the threshold, if the data item was not already in the cache. Other elements are a clock unit (403) for timing purposes, for example for timing of the duration d and a threshold storage (405), and a sliding window storage (404).

Other device architectures than illustrated by figure 4 are possible and compatible with the method of the invention. Notably, according to variant embodiments, the invention is implemented as a mix of hardware and software, or as a pure hardware implementation, for example in the form of a dedicated component (for example in an ASIC, FPGA or VLSI, respectively meaning Application Specific Integrated Circuit, Field-Programmable Gate Array and Very Large Scale Integration), or in the form of multiple electronic components integrated in a device or in the form of a mix of hardware and software components, for example as a dedicated electronic card in a computer, each of the means implemented in hardware, software or a mix of these, in same or different soft- or hardware modules.

**Claims**

1.  A method for caching of data items in a cloud based data processing system, the method being **characterized in that** it comprises the following steps:

    measuring (301) a mean request arrival rate for a read request of a data item over a time period of duration $d$, said time period being shifted to end within less than $x$ seconds before current time;
    upon receipt of a read request for a data item, comparing (302) the measured mean request arrival rate for the data item to a threshold defined as cloud storage cost over cloud compute cost;
    if the mean request arrival rate of read requests for the data item is superior to the threshold, adding (304) the data item to the cache if it was not already in the cache;
    otherwise, not adding the data item to the cache.

2.  The method according to Claim 1, wherein upon expiration of a timer, the mean request arrival rate for read requests for data items in the cache is compared to the threshold and a data item is removed if its mean request arrival rate is lower than the threshold.

3.  The method according to Claim 1 or 2, wherein upon receipt of said read request, the mean request arrival rate for data items in the cache is compared to the threshold and a data item is removed if its mean request arrival rate is lower than the threshold.

4.  The method according to any of Claim 1 to 3, wherein the determined time period $d$ is equal or superior to the inverse of the threshold.

5.  The method according to Claim 1 to 4, further comprising a step of periodically adapting the threshold to observed cloud storage cost and cloud compute cost.

6.  The method according to any of Claims 1 to 5, wherein said cloud based data processing system is a delivery platform for transmission of video content to a plurality of receiver devices and said data items are video chunks comprising a sequence of video frames.

7.  The method according to Claim 6, wherein said video chunks comprise generic video chunks that are transmitted to all of said plurality of receiver devices requesting a generic video chunk and wherein said video chunks further comprise targetable video chunks that are adapted, before transmitting to a receiver device of said plurality of receiver devices requesting the targetable video chunk, according to user preferences of a user of the receiver device by inlaying of targeted content in at least some video frames of the targetable video chunk, the targeted content being determined according to said user preferences.

8.  The method according to Claim 7, wherein said cloud storage cost is a cost of storing, by a cloud storage service, of a targetable video chunk which is adapted according to user preferences, and wherein said cloud compute cost is a cost of computing, by a cloud compute service, of a targetable video chunk for adapting it to user preferences.

9.  The method according to any Claim 1 to 5, where in the data items are computed from data blocks encoded using erasure correcting codes or data compression source codes, and computed data items are stored in the cache if their request arrival rate is superior to said threshold, or not stored in the cache otherwise, so as to be recomputed at each read request, said recomputing having said cloud compute cost.

10. A device for caching of data items in a cloud based service, the device being **characterized in that** it comprises the following means:

    a measurement unit for measuring a mean request arrival rate for a read request of a data item over a time period of duration $d$, said time period being shifted to end within less than $x$ seconds before current time;
    a comparison unit for comparing, upon receipt of a read request for a data item, the measured mean request arrival rate for the data item to a threshold defined as cloud storage cost over cloud compute cost;
    a cache adder for adding the data item to the cache if the mean request arrival rate of read requests for the data item is superior to the threshold, if the data item was not already in the cache.

**Fig. 1**

| Hour 1, #access | Hour 2, #access | Hour 3, #access | Hour 4, #access | Hour 5, #access | Hour 6, #access | Hour 7, #access | λ |
|---|---|---|---|---|---|---|---|
| 20 | 21 | 22 | 23 | 24 | 25 | 26 | 27 |
| 2 | 3 | 6 | 10 | - | - | - | 5.25 |
| 2 | 3 | 6 | 10 | 8 | - | - | 6.75 |
| 2 | 3 | 6 | 10 | 8 | 6 | - | 7.5 |

**Fig. 2a**

@T=22                                                              200

| (K,9) | (L,9) | (M,11) | (L,11) | (L,13) | (K,15) | (K,22) | (L,22) |
|---|---|---|---|---|---|---|---|

K=3, L = 4, M = 1

@T=26                                                              201

| (K,9) | (L,9) | (M,11) | (L,11) | (L,13) | (K,15) | (K,22) | (L,22) | (K,26) |
|---|---|---|---|---|---|---|---|---|

K=4, L = 4, M = 1

@T=30                                                              202

| (K,9) | (L,9) | (M,11) | (L,11) | (L,13) | (K,15) | (K,22) | (L,22) | (K,26) |
|---|---|---|---|---|---|---|---|---|

K=3, L = 2

**Fig. 2b**

**Fig. 3**

410                                                                      400

Sliding
window
memory
404

| Network interface 401 | Measurement unit 402 | Clock unit 403 |

| Cache adder 407 | Comparison unit 406 | Threshold S/C 405 |

Fig. 4

Europäisches Patentamt
European Patent Office
Office européen des brevets

**EUROPEAN SEARCH REPORT**

Application Number

EP 13 30 6079

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2011/271067 A1 (CHOU RANDY YEN-PANG [US] ET AL) 3 November 2011 (2011-11-03)<br>* paragraph [0032] *<br>* paragraph [0041] *<br>* figures 3,4,8 * | 1-10 | INV.<br>H04L29/08 |
| A | US 2013/179490 A1 (NAGA KRISHNA PUTTASWAMY [US] ET AL) 11 July 2013 (2013-07-11)<br>* paragraph [0004] *<br>* paragraph [0007] *<br>* paragraph [0010] *<br>* paragraph [0045] *<br>* paragraph [0052] - paragraph [0057] *<br>* paragraph [0068] - paragraph [0074] *<br>* figures 5,7 * | 1-10 | |
| A | US 2013/185229 A1 (NAGA KRISHNA P PUTTASWAMY [US] ET AL) 18 July 2013 (2013-07-18)<br>* paragraph [0005] - paragraph [0006] *<br>* paragraph [0030] - paragraph [0035] *<br>* paragraph [0059] - paragraph [0078] *<br>* figure 6 * | 1-10 | |

TECHNICAL FIELDS SEARCHED (IPC)

H04L

The present search report has been drawn up for all claims

| Place of search | Date of completion of the search | Examiner |
|---|---|---|
| The Hague | 8 October 2013 | Hes, Ronald |

EPO FORM 1503 03.82 (P04C01)

**ANNEX TO THE EUROPEAN SEARCH REPORT
ON EUROPEAN PATENT APPLICATION NO.**

EP 13 30 6079

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2013

| Patent document cited in search report | | Publication date | Patent family member(s) | | Publication date |
|---|---|---|---|---|---|
| US 2011271067 | A1 | 03-11-2011 | NONE | | |
| US 2013179490 | A1 | 11-07-2013 | US | 2013179490 A1 | 11-07-2013 |
| | | | WO | 2013106400 A1 | 18-07-2013 |
| US 2013185229 | A1 | 18-07-2013 | NONE | | |

EPO FORM P0459

For more details about this annex : see Official Journal of the European Patent Office, No. 12/82